# FASCICULE DE BREVET EUROPEEN

(11) **EP 3 487 363 B1**
(45) Date de publication et mention de la délivrance du brevet: **05.08.2020**
(21) Numéro de dépôt: 17754747.8
(22) Date de dépôt: 21.07.2017
(51) Int. Cl.: A47J 27/04, A47J 27/56

(54) **CUISEUR ÉLECTRIQUE**
ELEKTRISCHER KOCHER
ELECTRIC COOKER

(30) Priorité: 22.07.2016 FR 1657073
(43) Date de publication de la demande: 29.05.2019
(73) Titulaire: SEB S.A., 69130 Ecully (FR)
(72) Inventeur: MA, Chao, Hangzhou Zhejiang 310051 (CN); LV, Hua, Hangzhou Zhejiang 310051 (CN)
(74) Mandataire: Bourrières, Patrice
(86) Numéro de dépôt international: PCT/FR2017/052023
(87) Numéro de publication internationale: WO 2018/015694

(56) Documents cités:
- WO-A1-2015/080394
- US-A- 5 097 753
- US-B1- 6 840 159

## Description

La présente invention concerne le domaine de la cuisson des aliments, il concerne concrètement un cuiseur électrique.

Les cuiseurs électriques pour cuire le riz, comme les cuiseurs à riz actuels, comprennent un récipient interne à l'intérieur duquel est disposé un panier à vapeur, le riz est placé dans le panier à vapeur, l'eau dans le récipient interne ; on chauffe le récipient interne afin de porter l'eau se trouvant dans le récipient interne à ébullition pour qu'elle pénètre dans le panier à vapeur et vienne rincer le riz, ceci jusqu'à ce que le niveau de l'eau baisse en-dessous du panier à vapeur ; on procède ensuite à la séparation du riz et de l'eau ; puis on continue de chauffer, et on emploie la vapeur générée pour cuire le riz à la vapeur ; et l'eau du rinçage aura emporté une partie du sucre contenue dans le riz avec l'eau de riz de manière à obtenir ainsi un riz cuit à faible teneur en sucre.

Le document US 6 840 151 B1 décrit un tel cuiseur électrique.

L'utilisation des paniers à vapeur existant actuellement présente certains inconvénients, notamment parce qu'ils utilisent uniquement de l'eau bouillante, ce qui est peu favorable au contact entier de l'eau et du riz. La méthode dans laquelle l'eau entre dans le panier à vapeur pour venir rincer le riz ou faire en sorte que le riz absorbe l'eau ne permet pas de garantir qu'une quantité suffisante d'eau entre dans le panier à vapeur, ce qui conduit à l'impossibilité pour une partie du riz d'entrer en contact avec l'eau et donc à l'impossibilité de procéder efficacement au rinçage du riz et à l'absorption de l'eau par le riz, ce qui affecte au final la texture en bouche du riz obtenu ; en outre, les structures actuelles de panier à vapeur ne permettent pas non plus de garantir la bonne réalisation du processus de séparation de l'eau et du riz, ce qui rend difficile l'obtention d'un riz à indice glycémique (IG) (sucre) bas.

Le principal objectif de la présente invention est de fournir un cuiseur électrique permettant de résoudre les difficultés techniques des cuiseurs électriques actuels de réalisation stable du processus de contact de l'eau et du riz ou de séparation de l'eau et du riz qui entraînent l'impossibilité de cuire un riz à indice glycémique (IG) bas.

Afin de réaliser l'objectif susdit, la présente invention propose un cuiseur électrique qui comprend : un récipient interne ; à l'intérieur duquel récipient interne est installé un panier à vapeur, et sous ce panier à vapeur se trouve un mécanisme d'ouverture faisant face à la paroi du fond du récipient interne et/ou situé dans le prolongement de la paroi latérale du récipient interne ; ledit panier à vapeur est pourvu d'une zone perméable et inclut une chambre de remplissage située sur cette zone perméable ; l'espace d'ouverture entouré par le mécanisme d'ouverture est relié à la chambre de remplissage par l'intermédiaire de la zone perméable ; la partie supérieure du panier à vapeur et l'ouverture supérieure du récipient interne sont hermétiquement abouchées ; un élément de régulation de la pression, avec au moins une partie de cet élément de régulation de la pression étant installée sur le récipient interne ou le panier à vapeur.

Selon une autre variante de réalisation, l'intervalle entre la surface extérieure du panier à vapeur et la surface latérale intérieure du récipient interne forme un compartiment ; et le cuiseur électrique comprend encore : un boîtier externe, le récipient interne étant disposé à l'intérieur du boîtier externe ; un couvercle supérieur, lequel couvercle supérieur est monté sur le boîtier externe, et lequel couvercle supérieur est pourvu d'un canal de raccord avec l'espace extérieur au cuiseur électrique, l'élément de régulation de la pression étant destiné à réguler l'état de liaison entre le canal de raccord et le compartiment.

Selon une autre variante de réalisation, l'élément de régulation de la pression comprend : un premier orifice de raccord situé sur le panier à vapeur, le compartiment étant relié audit canal de raccord par l'intermédiaire de ce premier orifice de raccord, et le compartiment, le premier orifice de raccord et le canal de raccord constituant un circuit d'air ; un élément de commutation, lequel élément de commutation est installé à l'intérieur du circuit d'air et contrôle l'état d'ouverture et de fermeture du circuit d'air.

Selon une autre variante de réalisation, l'élément de commutation est installé à l'intérieur du canal de raccord.

Selon une autre variante de réalisation, l'élément de commutation est un clapet de non-retour ou une électrovalve.

Selon une autre variante de réalisation, l'élément de commutation est une pompe de compression, laquelle pompe de compression pressurise le compartiment.

Selon une autre variante de réalisation, l'élément de régulation de la pression comprend encore un tuyau de raccord correspondant au premier orifice de raccord, et l'élément de commutation est relié au compartiment par l'intermédiaire de ce tuyau de raccord.

Selon une autre variante de réalisation, l'élément de régulation de la pression comprend encore un cylindre d'installation situé sur le panier à vapeur, aux deux extrémités de ce cylindre d'installation se trouvent le second orifice de raccord et le premier orifice de raccord, le cylindre d'installation comprend encore un compartiment de liaison qui est relié au second orifice de raccord et au premier orifice de raccord, le compartiment est relié à l'élément de commutation par l'intermédiaire du second orifice de raccord, du compartiment de liaison, du premier orifice de raccord et du tuyau de raccord.

Selon une autre variante de réalisation, l'élément de régulation de la pression comprend encore : une pièce élastique installée à l'intérieur du compartiment de liaison ; une pièce d'étanchéité installée à l'intérieur du compartiment de liaison, laquelle pièce d'étanchéité est pourvue d'un orifice de passage situé dans le prolongement axial du cylindre d'installation, et laquelle pièce d'étanchéité est disposée au niveau du premier orifice de raccord en s'appuyant sur la pièce élastique ; le tuyau de raccord est relié à l'orifice de passage.

Selon une autre variante de réalisation, le cylindre d'installation comprend un mécanisme de blocage protubérant à l'intérieur du compartiment de liaison, lequel mécanisme de blocage est situé au niveau du premier orifice de raccord de manière à bloquer la pièce d'étanchéité.

Selon une autre variante de réalisation, l'intervalle entre la surface extérieure du panier à vapeur et la surface latérale intérieure du récipient interne forme un compartiment ; et l'élément de régulation de la pression comprend encore : un cylindre d'installation situé sur le panier à vapeur, avec situés aux deux extrémités de ce cylindre d'installation le premier orifice de raccord et le second orifice de raccord, le cylindre d'installation comportant encore le compartiment de liaison qui est relié au second orifice de raccord et au premier orifice de raccord, le compartiment étant relié au second orifice de raccord ; une pièce d'obturation destinée à boucher le second orifice de raccord ou le premier orifice de raccord, laquelle pièce d'obturation est installée de manière mobile à l'intérieur du compartiment de liaison ; lorsque la pièce d'obturation quitte le second orifice de raccord ou le premier orifice de raccord, le second orifice de raccord, le compartiment de liaison, et le premier orifice de raccord sont reliés entre eux.

Selon une autre variante de réalisation, l'élément de régulation de la pression comprend encore la pièce élastique installée à l'intérieur du compartiment de liaison, la pièce d'obturation est fermement comprimée par la pièce élastique sur le second orifice de raccord et bouche celui-ci.

Selon une autre variante de réalisation, la pièce d'obturation est une boule.

Selon une autre variante de réalisation, il n'y a qu'un seul second orifice de raccord, et la section transversale du second orifice de raccord est inférieure à la section transversale radiale du compartiment de liaison.

Selon une autre variante de réalisation, il y a plusieurs seconds orifices de raccord, et la somme des sections transversales de ces seconds orifices de raccord est inférieure à la section transversale radiale du compartiment de liaison.

Selon une autre variante de réalisation, le cylindre d'installation est installé sur le bord supérieur du panier à vapeur.

Lors de l'application du projet de la présente invention, l'usage de l'élément de régulation de la pression situé sur le récipient interne ou le panier à vapeur permet de réguler et contrôler efficacement la pression à l'intérieur du compartiment, et ainsi de faire en sorte que l'eau se trouvant à l'intérieur du compartiment soit, sous l'action de la différence de pression entre le compartiment et la chambre de remplissage, comprimée jusque dans la chambre de remplissage en traversant le mécanisme d'ouverture situé sur le panier à vapeur, ou bien soit évacuée hors de la chambre de remplissage et renvoyée jusque dans le compartiment, ceci afin de réaliser le contact entre l'eau et le riz puis la séparation de l'eau et du riz à l'intérieur de la chambre de remplissage.

Sous le panier à vapeur se trouve le mécanisme d'ouverture faisant face à la paroi du fond du récipient interne et/ou situé dans le prolongement de la paroi latérale du récipient interne ; le panier à vapeur est pourvu de la zone perméable et inclut la chambre de remplissage située sur cette zone perméable ; l'espace d'ouverture entouré par le mécanisme d'ouverture est relié à la chambre de remplissage par l'intermédiaire de la zone perméable ; le panier à vapeur et le récipient interne sont hermétiquement abouchés de manière que l'intervalle situé entre la surface extérieure du panier à vapeur et la paroi latérale intérieure du récipient interne forme le compartiment.

Après que le panier à vapeur a été placé dans le récipient interne, le niveau de l'eau se trouvant à l'intérieur du récipient interne ferme le côté du mécanisme d'ouverture se trouvant le plus éloigné de la chambre de remplissage, alors l'échange gazeux entre le compartiment et la chambre de remplissage cesse. Dans une phase préliminaire, lorsqu'on chauffe le récipient interne, l'eau se trouvant à l'intérieur du récipient interne se transforme en vapeur, ce qui entraîne une augmentation de la pression à l'intérieur du compartiment, et donc une différence de pression entre le compartiment et la chambre de remplissage. A ce moment-là, l'élément de régulation de la pression ne fonctionne pas, c'est-à-dire qu'il ne libère pas la pression vers l'extérieur, aussi l'eau est envoyée sous l'effet de la pression jusque dans la chambre de remplissage pour entrer en contact avec le riz, ceci afin de réaliser le trempage et la cuisson à l'eau du riz. Lorsque l'élément de régulation de la pression se met à libérer la pression, la différence de pression entre le compartiment et la chambre de remplissage décroît, et l'eau reflue lentement hors de la chambre de remplissage, on obtient ainsi la séparation de l'eau et du riz et le rinçage du riz par l'eau.

Lorsque l'élément de régulation de la pression est doté de la fonctionnalité de pressurisation du compartiment, avec l'augmentation de la pression à l'intérieur du compartiment, l'eau est comprimée et envoyée jusque dans la chambre de remplissage pour entrer en contact avec le riz. Lorsque l'élément de régulation de la pression se met à libérer la pression, l'eau reflue hors de la chambre de remplissage.

Il faut préciser que, lors du processus de chauffage du récipient interne, combiné au fonctionnement de l'élément de régulation de la pression, l'eau est sous l'action de la différence de pression envoyée de manière répétée dans la chambre de remplissage pour entrer en contact avec le riz de manière à successivement rincer, tremper, cuire à l'eau le riz et à ce que le riz absorbe l'eau ; le niveau de l'eau diminue jusqu'à ne plus pouvoir fermer l'espace d'ouverture, à ce moment-là, le compartiment et la chambre de remplissage sont progressivement reliés. Lorsqu'on continue à chauffer le récipient interne, même si l'élément de régulation de la pression continue à faire croître la pression à l'intérieur du compartiment, l'eau ne peut plus parvenir à la chambre de remplissage. A ce moment-là, la pression générée s'élève et passe à travers le mécanisme d'ouverture pour pénétrer dans la chambre de remplissage, ou bien après avoir pénétré dans le compartiment, entre dans la chambre de remplissage en traversant le mécanisme d'ouverture, ceci afin de mener à bien le processus de cuisson à la vapeur du riz.

On peut voir que le contrôle de l'élément de régulation de la pression permet de faire en sorte que l'eau se trouvant dans le récipient interne du cuiseur électrique entre dans ou sorte de la chambre de remplissage ; le contrôle du nombre d'entrées ou de sorties de l'eau dans ou hors de la chambre de remplissage, de la température de l'eau et du temps de rétention de l'eau à l'intérieur de la chambre de remplissage permet au cuiseur électrique de réaliser de manière automatique le processus de rinçage du riz et d'absorption de l'eau par le riz, et en même temps de réaliser le processus de cuisson à l'eau puis cuisson à la vapeur du riz à l'intérieur de la chambre de remplissage, de manière que le cuiseur électrique cuise un riz à indice glycémique (IG) bas plus nutritif, et à augmenter le degré de satisfaction des consommateurs relativement au processus de cuisson. Aussi, le cuiseur électrique de la présente invention est multifonction, largement automatisé et pratique à l'usage.

Les figures annexes qui constituent une partie intégrante de la présente demande sont destinées à améliorer la compréhension de la présente invention, les exemples d'applications schématiques de la présente invention et leurs explications sont destinés à expliquer la présente invention, sans pour autant constituer de restriction inappropriée de la présente invention. Dans les figures annexes :
La figure 1 est le schéma structurel d'un cuiseur à riz pourvu d'un élément de régulation de la pression selon un exemple d'application possible de la présente invention.
La figure 2 est le schéma de coupe du cuiseur à riz de la figure 1 après assemblage du panier à vapeur et du récipient interne.
La figure 3 est le schéma tridimensionnel du récipient interne et du panier à vapeur du cuiseur à riz de la figure 2 après assemblage.
La figure 4 est un agrandissement de la zone A de la figure 3.
La figure 5 est le schéma du statut de cuisson lorsque l'eau à l'intérieur du récipient interne du cuiseur à riz de la figure 1 n'est pas entrée en contact avec le riz dans la chambre de remplissage.
La figure 6 est le schéma du statut de cuisson lorsque l'eau à l'intérieur du récipient interne du cuiseur à riz de la figure 1 est entrée en contact avec le riz dans la chambre de remplissage.
La figure 7 est le schéma structurel d'un cuiseur à riz pourvu d'un élément de régulation de la pression selon un autre exemple d'application possible de la présente invention.
La figure 8 est un agrandissement de la zone B de la figure 7.

Il faut préciser qu'en l'absence d'incompatibilité, les exemples d'applications de la présente demande et les caractéristiques de ces exemples d'applications peuvent être mutuellement combinées. On va ci-dessous expliquer de manière concise la présente invention au moyen des figures annexes de référence combinées à des exemples d'applications.

Il faut noter que les explications détaillées ci-dessous sont toutes fournies à titre d'exemples dans le but de fournir une explication plus poussée de la présente invention. Sauf mention contraire, tous les termes techniques et scientifiques employés ici ont l'acception courante telle qu'admise par le personnel technique ordinaire du domaine technique duquel relève la présente demande.

Dans la présente invention, en l'absence d'indication inverse, les termes de direction tels que "au-dessus, au-dessous, en haut de, en bas de" renvoient généralement aux orientations indiquées sur les figures annexes, ou bien renvoient aux directions verticales, perpendiculaires ou de gravité des pièces elles-mêmes. De même, afin de faciliter la compréhension et la description, "à l'intérieur de" et "à l'extérieur de" renvoient à l'intérieur ou à l'extérieur de la silhouette de la pièce en question, toutefois, les termes de direction susmentionnés ne constituent en rien une limitation de la présente invention.

La présente invention propose un cuiseur électrique permettant de résoudre les difficultés techniques des cuiseurs électriques actuels de réalisation stable du processus de contact de l'eau et du riz ou de séparation de l'eau et du riz qui entraînent l'impossibilité de cuire un riz à indice glycémique (IG) bas.

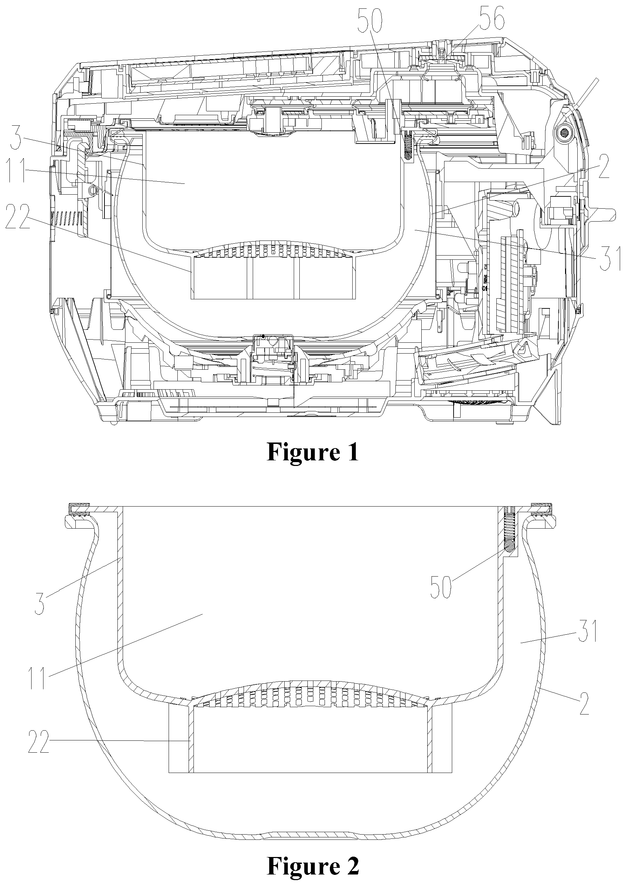

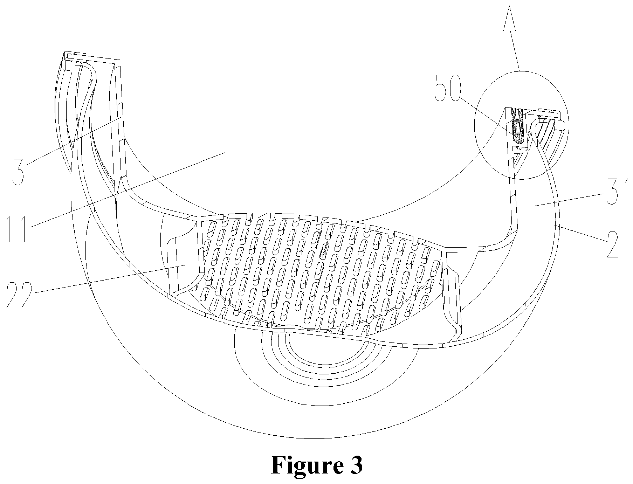

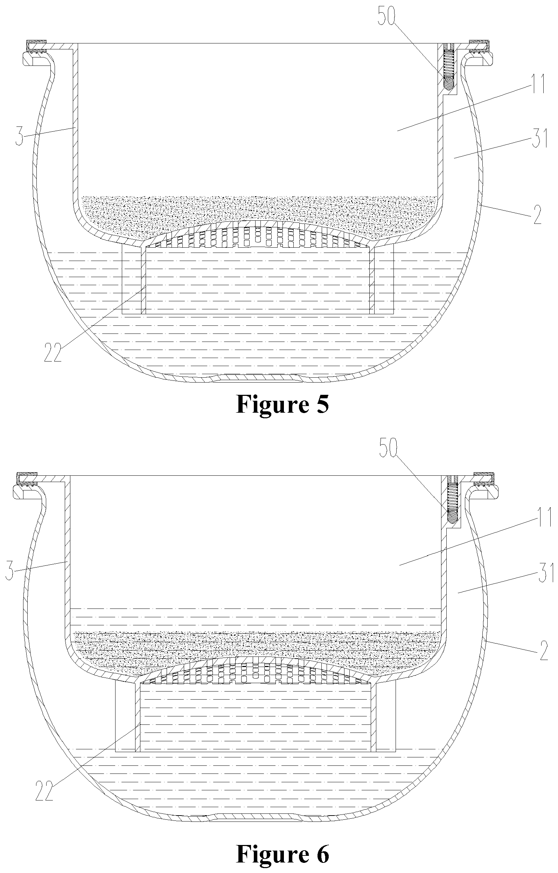

Les cuiseurs électriques présentés dans les figures 1 à 8 de la présente invention sont des cuiseurs à riz.

Le cuiseur à riz tel que représenté sur les figures 1 à 8 comprend un récipient interne (2), et un panier à vapeur (3) et un élément de régulation de la pression (50) installés à l'intérieur du récipient interne (2). Sous le panier à vapeur (3) se trouve un mécanisme d'ouverture (22) qui fait face au fond du récipient interne et/ou qui prolonge la paroi externe du récipient interne (2). Le panier à vapeur (3) comprend une zone perméable et une chambre de remplissage (11) située au-dessus de cette zone perméable. L'espace d'ouverture entouré par le mécanisme d'ouverture (22) est relié à la chambre de remplissage par l'entremise de ladite zone perméable. La partie supérieure du panier à vapeur (3) et l'ouverture du récipient interne (2) sont hermétiquement abouchées. Au moins une partie de l'élément de régulation de la pression est installée sur le récipient interne (2) ou le panier à vapeur (3).

Bien entendu, le cuiseur électrique de la présente invention peut encore être un four micro-ondes, avec installé en son sein un récipient interne (2) et un panier à vapeur (3).

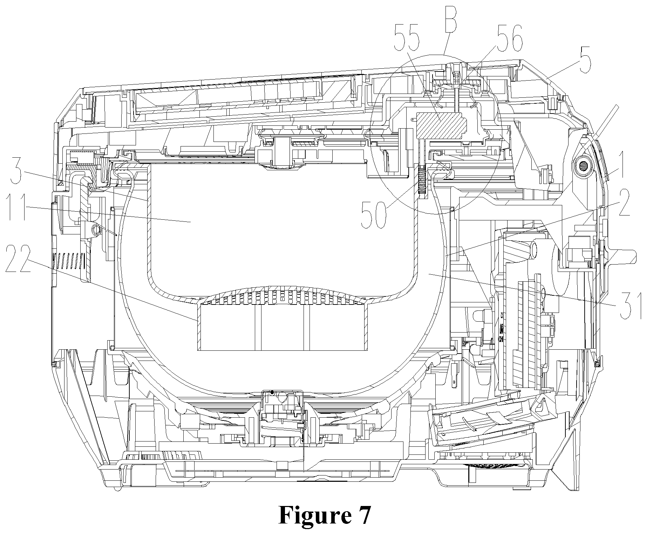

Comme l'indiquent les figures 1 et 7, l'intervalle entre la surface extérieure du panier à vapeur (3) et la surface latérale intérieure du récipient interne (2) forme un compartiment (31). Le cuiseur électrique comprend par ailleurs: un boîtier externe (1) et un couvercle supérieur (5), le récipient interne (2) étant disposé à l'intérieur du boîtier externe (1) et le couvercle supérieur (5) étant installé sur le boîtier externe (1), et le couvercle supérieur (5) étant pourvu d'un canal de raccord (56) avec l'espace extérieur au cuiseur électrique. L'élément de régulation de la pression (50) régule l'état de liaison entre le canal de raccord (56) et le compartiment (31). L'élément de régulation de la pression (50) est destiné à réguler la pression à l'intérieur du compartiment (31) pour faire en sorte que l'eau se trouvant à l'intérieur du récipient interne (2) traverse le mécanisme d'ouverture (22) pour entrer dans ou sortir de la chambre de remplissage (11).

L'usage de l'élément de régulation de la pression (50) situé sur le récipient interne (2) ou le panier à vapeur (3) permet de réguler et contrôler efficacement la pression à l'intérieur du compartiment (31), et ainsi de faire en sorte que l'eau se trouvant à l'intérieur du compartiment (31) soit, sous l'action de la différence de pression entre le compartiment (31) et la chambre de remplissage (11), comprimée jusque dans la chambre de remplissage (11) en traversant le mécanisme d'ouverture (22) situé sur le panier à vapeur (3), ou bien soit évacuée hors de la chambre de remplissage (11) et renvoyée jusque dans le compartiment (31), ceci afin de réaliser le contact entre l'eau et le riz ou la séparation de l'eau et du riz à l'intérieur de la chambre de remplissage (11).

Après que le panier à vapeur a été placé dans le récipient interne (2), le niveau de l'eau se trouvant à l'intérieur du récipient interne ferme le côté du mécanisme d'ouverture (22) se trouvant le plus éloigné de la chambre de remplissage (11), alors l'échange gazeux entre le compartiment (31) et la chambre de remplissage (11) cesse. Dans la phase préliminaire, lorsqu'on chauffe le récipient interne (2), l'eau se trouvant à l'intérieur du récipient interne (2) se transforme en vapeur, ce qui entraîne une augmentation de la pression à l'intérieur du compartiment (31), et donc une différence de pression entre le compartiment (31) et la chambre de remplissage (11). A ce moment-là, l'élément de régulation de la pression (50) ne fonctionne pas, c'est-à-dire qu'il ne libère pas la pression vers l'extérieur, aussi l'eau est envoyée sous l'effet de la pression jusque dans la chambre de remplissage (11) pour entrer en contact avec le riz, ceci afin de réaliser le trempage et la cuisson à l'eau du riz. Lorsque l'élément de régulation de la pression (50) se met à libérer la pression, la différence de pression entre le compartiment (31) et la chambre de remplissage (11) décroît, et l'eau reflue lentement hors de la chambre de remplissage (11), on obtient ainsi la séparation de l'eau et du riz et le rinçage du riz par l'eau.

Lorsque l'élément de régulation de la pression (50) est doté de la fonctionnalité de pressurisation du compartiment (31), avec l'augmentation de la pression à l'intérieur du compartiment (31), l'eau est comprimée et envoyée jusque dans la chambre de remplissage (11) pour entrer en contact avec le riz. Lorsque l'élément de régulation de la pression (50) se met à libérer la pression, l'eau reflue hors de la chambre de remplissage (11).

Il faut préciser que, lors du processus de chauffage du récipient interne (2), combiné au fonctionnement de l'élément de régulation de la pression (50), l'eau est sous l'action de la différence de pression envoyée de manière répétée dans la chambre de remplissage (11) pour entrer en contact avec le riz de manière à successivement rincer, tremper, cuire à l'eau le riz et à ce que le riz absorbe l'eau. Le niveau de l'eau diminue jusqu'à ne plus pouvoir fermer l'espace d'ouverture, à ce moment-là, le compartiment (31) et la chambre de remplissage (11) sont progressivement reliés. Lorsqu'on continue à chauffer le récipient interne (2), même si l'élément de régulation de la pression (50) continue à faire croître la pression à l'intérieur du compartiment (31), l'eau ne peut plus parvenir à la chambre de remplissage (11). A ce moment-là, la pression générée s'élève et passe à travers le mécanisme d'ouverture (22) pour pénétrer dans la chambre de remplissage (11), ou bien après avoir pénétré dans le compartiment (31), entre dans la chambre de remplissage (11) en traversant le mécanisme d'ouverture (22), ceci afin de mener à bien le processus de cuisson à la vapeur du riz.

On peut voir que le contrôle de l'élément de régulation de la pression (50) permet de faire en sorte que l'eau se trouvant dans le récipient interne (2) du cuiseur électrique entre dans ou sorte de la chambre de remplissage (11). Le contrôle du nombre d'entrées ou de sorties de l'eau dans ou hors de la chambre de remplissage (11), de la température de l'eau et du temps de rétention de l'eau à l'intérieur de la chambre de remplissage (11) permet au cuiseur électrique de réaliser de manière automatique le processus de rinçage du riz et d'absorption de l'eau par le riz, et en même temps de réaliser le processus de cuisson à l'eau puis cuisson à la vapeur du riz à l'intérieur de la chambre de remplissage (11), de manière que le cuiseur électrique cuise un riz à indice glycémique (IG) bas plus nutritif, et à augmenter le degré de satisfaction des consommateurs relativement au processus de cuisson. Aussi, le cuiseur électrique de la présente invention est multifonction, largement automatisé et pratique à l'usage.

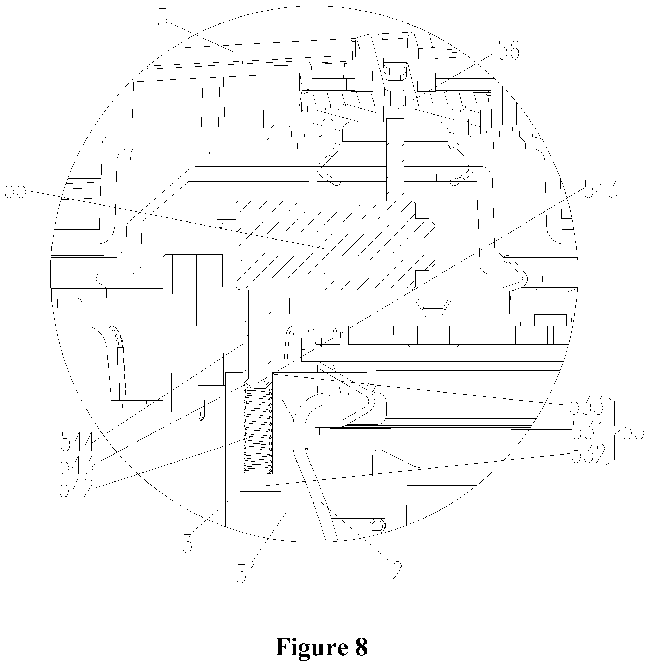

Comme l'indiquent les figures 7 et 8, l'élément de régulation de la pression (50) comprend : un élément de commutation (55) et un premier orifice de raccord (533) situé sur le panier à vapeur (3), le compartiment (31) étant relié au canal de raccord (56) par l'intermédiaire de ce premier orifice de raccord (533), et le compartiment (31), le premier orifice de raccord (533) et le canal de raccord (56) constituant un circuit d'air. L'élément de commutation (55) est installé à l'intérieur du circuit d'air et contrôle l'état d'ouverture et de fermeture du circuit d'air. L'usage de l'élément de commutation (55) et le contrôle du fonctionnement de l'élément de commutation (55) permettent de réaliser les opérations de libération de la pression ou de compression du compartiment (31), ceci afin de réguler la pression à l'intérieur du compartiment (31) et de la chambre de remplissage (11).

Concrètement, l'élément de commutation (55) est installé à l'intérieur du canal de raccord (56). Bien entendu l'élément de commutation (55) peut aussi être installé au niveau de la jonction entre le premier orifice de raccord (533) et le canal de raccord (56).

L'élément de commutation (55) est un clapet de non-retour ou une électrovalve. Lorsqu'on utilise un clapet de non-retour, la pression à l'intérieur du compartiment (31) peut être dirigée vers l'extérieur par l'entremise du clapet de non-retour, et l'air extérieur ne pourra pas entrer dans le compartiment (31) par l'intermédiaire du clapet extérieur. Lorsqu'on utilise une électrovalve, et lorsque l'électrovalve fonctionne, la pression à l'intérieur du compartiment (31) peut être évacuée vers l'extérieur par l'intermédiaire de l'électrovalve.

L'élément de commutation (55) est une pompe de compression, laquelle pompe de compression pressurise le compartiment (31). Cela permet de comprimer et envoyer aisément l'eau depuis le récipient interne jusque dans la chambre de remplissage (11), et de garantir le contact entre l'eau et le riz, ce qui est favorable au contrôle de la durée d'immersion du riz dans l'eau, et permet de réduire aisément l'indice glycémique (IG) du riz.

Dans l'exemple d'application concret exposé dans les figures 7 et 8, l'élément de régulation de la pression (50) comprend encore un tuyau de raccord (544) correspondant et relié au premier orifice de raccord (533), et, l'élément de commutation (55) est relié au compartiment (31) par l'intermédiaire de ce tuyau de raccord (544). De cette manière, lorsque l'élément de commutation (55) fonctionne, le gaz peut passer par l'élément de commutation (55) et le tuyau de raccord (544), afin de réaliser l'échange gazeux entre le canal de raccord (56) et le compartiment (31). Lorsque l'élément de commutation (55) est une pompe de compression, l'injection de gaz à l'intérieur du compartiment (31) est très pratique. De cette manière, on peut accélérer l'élévation de la pression à l'intérieur du compartiment (31), faire en sorte que l'eau se trouvant à l'intérieur du compartiment (31) soit envoyée rapidement jusque dans la chambre de remplissage (11), ceci afin d'améliorer le côté pratique du cuiseur électrique.

Comme l'indique la figure 8, l'élément de régulation de la pression (50) comprend encore un cylindre d'installation (53) situé sur le panier à vapeur (3), aux deux extrémités de ce cylindre d'installation (53) se trouvent le second orifice de raccord (532) et le premier orifice de raccord (533), le cylindre d'installation (53) comprend encore un compartiment de liaison (531) qui est relié au second orifice de raccord (532) et au premier orifice de raccord (533), le compartiment (31) est relié à l'élément de commutation (55) par l'intermédiaire du second orifice de raccord (532), du compartiment de liaison (531), du premier orifice de raccord (533) et du tuyau de raccord (544). De cette manière, l'installation du cylindre d'installation (53) permet de garantir une liaison fiable entre le compartiment (31) et le canal de raccord (56), et, grâce au compartiment de liaison (531), l'élément de commutation (55) peut injecter de l'air dans le compartiment (31) ou libérer la pression hors du compartiment (31).

Comme l'indique la figure 8, l'élément de régulation de la pression (50) comprend encore : une pièce élastique (542) et une pièce d'étanchéité (543) installées à l'intérieur du compartiment de liaison (531), laquelle pièce d'étanchéité (543) est pourvue d'un orifice de passage (5431) situé dans le prolongement axial du cylindre d'installation (53), et laquelle pièce d'étanchéité (543) est disposée au niveau du premier orifice de raccord (533) en s'appuyant sur la pièce élastique (542). Le tuyau de raccord (544) est relié à l'orifice de passage (5431) correspondant. La présence de la pièce d'étanchéité (543) permet, lorsque le tuyau de raccord (544) et la pièce d'étanchéité (543) sont reliés, aux gaz d'entrer et de sortir uniquement le long de l'orifice de passage (5431). Par ailleurs, l'action de la pièce élastique (542) permet de fournir un support à la pièce d'étanchéité (543), ceci afin de garantir l'étanchéité de la jonction entre la pièce d'étanchéité (543) et le tuyau de raccord (544).

La pièce d'étanchéité est faite en caoutchouc. De cette manière, la fiabilité d'étanchéité entre la pièce d'étanchéité (543) et la paroi interne du cylindre d'installation (53) s'en trouve améliorée.

Le cylindre d'installation (53) comprend un mécanisme de blocage protubérant à l'intérieur du compartiment de liaison (531), lequel mécanisme de blocage est situé au niveau du premier orifice de raccord (533) de manière à bloquer la pièce d'étanchéité (543). De cette manière, on évite que la pièce d'étanchéité (543) ne glisse et ne sorte hors de l'intérieur du compartiment de liaison (531), et on augmente ainsi la stabilité de fonctionnement de l'élément de régulation de la pression (50).

Dans les exemples d'applications concrets des figures 1 à 6, l'élément de régulation de la pression (50) comprend encore : le cylindre d'installation (53) situé sur le panier à vapeur (3) destiné à fermer une pièce d'obturation (541) du second orifice de raccord (532) ou du premier orifice de raccord (533). Aux deux extrémités de ce cylindre d'installation (53) se trouvent respectivement le second orifice de raccord (532) et le premier orifice de raccord (533), le cylindre d'installation (53) comprend le compartiment de liaison (531) qui est relié au second orifice de raccord (532) et au premier orifice de raccord (533), le compartiment (31) est relié au second orifice de raccord (532). La pièce d'étanchéité est installée de manière mobile à l'intérieur du compartiment de liaison (531), lorsque la pièce d'obturation (541) quitte le second orifice de raccord (532) ou le premier orifice de raccord (533), le second orifice de raccord (532), le compartiment de liaison (531), et le premier orifice de raccord (533) sont reliés entre eux. Comme le cylindre d'installation (53) est pourvu d'une pièce d'obturation (541), la pièce d'obturation (541) est reliée au second orifice de raccord (532) et au premier orifice de raccord (533), ce qui permet de réguler la connexion entre le canal de raccord (56) et le compartiment (31), et contrôler ainsi de manière fiable la pression à l'intérieur du compartiment (31), ceci afin d'obtenir le fonctionnement régulier du cuiseur électrique.

Comme le montrent les figures 1 à 6, l'élément de régulation de la pression (50) comprend encore une pièce élastique (542) installée à l'intérieur du compartiment de liaison (531), la pièce d'obturation (541) est fermement comprimée par la pièce élastique (542) sur le second orifice de raccord (532) et bouche celui-ci. De cette manière, l'action du propre poids de la pièce d'obturation (541) et de l'élasticité de la pièce élastique (542) permet d'exercer de manière prolongée l'obturation du second orifice de raccord (532). A ce moment-là, lorsque la pression à l'intérieur du compartiment (31) a crû et qu'il faut libérer de la pression vers l'extérieur, la pression à l'intérieur du compartiment (31) dépasse l'action du propre poids de la pièce d'obturation (541) et de l'élasticité de la pièce élastique (542) et provoque l'ouverture de la pièce d'obturation (541) et la contraction de la pièce élastique (542), ensuite, le second orifice de raccord (532) et le premier orifice de raccord (533) sont reliés par l'intermédiaire du compartiment de liaison (531).

Lors du fonctionnement du cuiseur électrique, lorsque la pièce d'obturation (541) reçoit une pression venant du compartiment (31) supérieure à la somme de la force élastique de la pièce élastique (542) et du propre poids de la pièce d'obturation (541), alors la pièce d'obturation (541) se déplace dans la direction opposée au second orifice de raccord (532) et entraîne la connexion entre le compartiment (31) et l'extérieur du cuiseur à riz, de sorte que la pression à l'intérieur du compartiment (31) est maintenue constante, on peut ainsi contrôler efficacement la pression à l'intérieur du compartiment (31).

La pièce d'obturation (541) est une boule. De cette manière, l'abouchement de la surface de la boule sur le second orifice de raccord (532) permet de renforcer la fiabilité de l'étanchéité entre la pièce d'obturation (541) et le second orifice de raccord (532). Selon une autre variante, il n'y a qu'un seul second orifice de raccord (532), et la section transversale du second orifice de raccord (532) est inférieure à la section transversale radiale du compartiment de liaison (531). De cette manière tout en garantissant que le cylindre d'installation (53) stoppe efficacement la pièce d'obturation (541), on réduit également les difficultés de fabrication du cylindre d'installation (53), et dans un même temps les coûts de revient de la fabrication du cuiseur électrique.

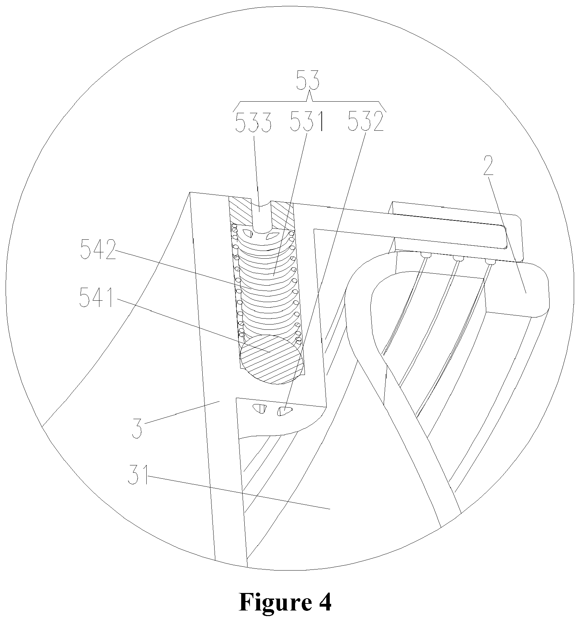

Comme l'indique la figure 4, il y a plusieurs seconds orifices de raccord (532), et la somme des sections transversales de ces seconds orifices de raccord (532) est inférieure à la section transversale radiale du compartiment de liaison (531). Cela permet, tout en garantissant la liaison entre les seconds orifices de raccord (532) et le compartiment (31), de limiter le déplacement de la pièce d'obturation (541), et d'éviter que pièce d'obturation (541) ne glisse hors de l'intérieur du compartiment de liaison (531).

Le cylindre d'installation (53) est installé sur le bord supérieur du panier à vapeur (3). On garantit ainsi, la rationalité structurelle du cuiseur électrique, et on évite efficacement le contact du cylindre d'installation (53) et de l'eau se trouvant à l'intérieur du compartiment (31).

Bien entendu, le cylindre d'installation (53) peut aussi être installé près du bord supérieur du panier à vapeur dans le prolongement de la paroi latérale du récipient interne (2). On peut ainsi le connecter de manière pratique au canal de raccord (56) du couvercle supérieur, ceci afin de garantir la fiabilité de la libération de la pression.

Il faut noter que les termes techniques employés ici sont uniquement destinés à décrire des modes d'applications concrets, et non à limiter les modes d'applications fournis à titre d'exemples selon la présente demande. Il faut aussi comprendre que l'usage dans la présente description des termes "comprendre" et/ou "inclure" implique qu'il existe des caractéristiques, étapes, tâches, composants, pièces et/ou des éléments les constituant.

Il faut préciser que les termes techniques "premier(ère)" et "second(e)" employés dans la description, les revendications, et les figures annexes de la présente demande servent à distinguer des phénomènes semblables et non à décrire une séquence spécifique ou un ordre d'antériorité-postériorité. Il faut comprendre que les données utilisées ainsi peuvent, dans des conditions appropriées, être interchangées.

Les exemples mentionnés plus haut constituent uniquement des exemples d'applications préférables de la présente invention, ils ne constituent en rien une restriction de la présente invention.

## Revendications

1. Cuiseur électrique comprenant :
- un récipient interne (2) ;
- à l'intérieur du récipient interne (2) est installé un panier à vapeur (3), et sous ce panier à vapeur (3) se trouve un mécanisme d'ouverture (22) faisant face à la paroi du fond du récipient interne (2) et/ou situé dans le prolongement de la paroi latérale du récipient interne (2) ; le panier à vapeur (3) est pourvu d'une zone perméable et inclut une chambre de remplissage (11) située sur cette zone perméable ; un espace d'ouverture entouré par le mécanisme d'ouverture (22) est relié à la chambre de remplissage (11) par l'intermédiaire de la zone perméable ; la partie supérieure du panier à vapeur (3) et l'ouverture supérieure du récipient interne (2) sont hermétiquement abouchées ; **caractérisé en ce que**:
- un élément de régulation de la pression (50), avec au moins une partie de cet élément de régulation de la pression (50) étant installée sur le récipient interne (2) ou le panier à vapeur (3).

2. Cuiseur électrique selon la revendication 1, **caractérisé en ce que** l'intervalle entre la surface extérieure du panier à vapeur (3) et la surface latérale intérieure du récipient interne (2) forme un compartiment (31); et **en ce que** le cuiseur électrique comprend :
- un boîtier externe (1), le récipient interne (2) étant disposé à l'intérieur du boîtier externe (1) ;
- un couvercle supérieur (5) monté sur le boîtier externe (1), et le couvercle supérieur (5) est pourvu d'un canal de raccord (56) avec l'espace extérieur au cuiseur électrique, l'élément de régulation de la pression (50) étant destiné à réguler l'état de liaison entre le canal de raccord (56) et le compartiment (31).

3. Cuiseur électrique selon la revendication 2, **caractérisé en ce que** l'élément de régulation de la pression (50) comprend :
- un premier orifice de raccord (533) situé sur le panier à vapeur (3), le compartiment (31) étant relié audit canal de raccord (56) par l'intermédiaire de ce premier orifice de raccord (533), et le compartiment (31), le premier orifice de raccord (533) et le canal de raccord (56) constituant un circuit d'air ;
- un élément de commutation (55), lequel élément de commutation (55) est installé à l'intérieur du circuit d'air et contrôle l'état d'ouverture et de fermeture du circuit d'air.

4. Cuiseur électrique selon la revendication 3, **caractérisé en ce que** l'élément de commutation (55) est installé à l'intérieur du canal de raccord (56).

5. Cuiseur électrique selon la revendication 3, **caractérisé en ce que** l'élément de commutation (55) est un clapet de non-retour ou une électrovalve.

6. Cuiseur électrique selon la revendication 3, **caractérisé en ce que** l'élément de commutation (55) est une pompe de compression, laquelle pompe de compression pressurise le compartiment (31).

7. Cuiseur électrique selon l'une des revendications 3 à 6, **caractérisé en ce que** l'élément de régulation de la pression (50) comprend un tuyau de raccord (544) correspondant au premier orifice de raccord (533), et l'élément de commutation (55) est relié au compartiment (31) par l'intermédiaire de ce tuyau de raccord (544).

8. Cuiseur électrique selon la revendication 7, **caractérisé en ce que** l'élément de régulation de la pression (50) comprend un cylindre d'installation (53) situé sur le panier à vapeur (3), aux deux extrémités de ce cylindre d'installation (53) se trouvent respectivement le second orifice de raccord (532) et le premier orifice de raccord (533), le cylindre d'installation (53) comprend un compartiment de liaison (531) qui est relié au second orifice de raccord (532) et au premier orifice de raccord (533), le compartiment (31) est relié à l'élément de commutation (55) par l'intermédiaire du second orifice de raccord (532), du compartiment de liaison (531), du premier orifice de raccord (533) et du tuyau de raccord (544).

9. Cuiseur électrique selon la revendication 8, **caractérisé en ce que** l'élément de régulation de la pression (50) comprend :
- une pièce élastique (542) installée à l'intérieur du compartiment de liaison (531) ;
- une pièce d'étanchéité (543) installée à l'intérieur du compartiment de liaison (531), laquelle pièce d'étanchéité (543) est pourvue d'un orifice de passage (5431) situé dans le prolongement axial du cylindre d'installation (53), et laquelle pièce d'étanchéité (543) est disposée au niveau du premier orifice de raccord (533) en s'appuyant sur la pièce élastique (542) ; le tuyau de raccord (544) est relié à l'orifice de passage (5431).

10. Cuiseur électrique selon la revendication 9, **caractérisé en ce que** le cylindre d'installation (53) comprend un mécanisme de blocage protubérant à l'intérieur du compartiment de liaison (531), lequel mécanisme de blocage est situé au niveau du premier orifice de raccord (533) de manière à bloquer la pièce d'étanchéité (543).

11. Cuiseur électrique selon l'une des revendications 1 à 10, **caractérisé en ce que** l'intervalle entre la surface extérieure du panier à vapeur (3) et la surface latérale intérieure du récipient interne (2) forme le compartiment (31) ; et **en ce que** l'élément de régulation de la pression comprend :
- un cylindre d'installation (53) situé sur le panier à vapeur (3) ; aux deux extrémités de ce cylindre d'installation (53) se trouvent respectivement le premier orifice de raccord (533) et le second orifice de raccord (532) ; le cylindre d'installation (53) comprend un compartiment de liaison (531) qui est relié au second orifice de raccord (532) et au premier orifice de raccord (533) ; le compartiment (31) est relié au second orifice de raccord (532) ;
- une pièce d'obturation (541) destinée à boucher le second orifice de raccord (532) ou le premier orifice de raccord (533), laquelle pièce d'obturation (541) est installée de manière mobile à l'intérieur du compartiment de liaison (531) ; lorsque la pièce d'obturation (541) quitte le second orifice de raccord (532) ou le premier orifice de raccord (533), le second orifice de raccord (532), le compartiment de liaison (531) et le premier orifice de raccord (533) sont reliés entre eux.

12. Cuiseur électrique selon la revendication 11, **caractérisé en ce que** l'élément de régulation de la pression (50) comprend la pièce élastique (542) installée à l'intérieur du compartiment de liaison (531), la pièce d'obturation (541) est fermement comprimée par la pièce élastique (542) sur le second orifice de raccord (532) et bouche celui-ci.

13. Cuiseur électrique selon la revendication 12, **caractérisé en ce que** la pièce d'obturation (541) est une boule.

14. Cuiseur électrique selon la revendication 13, **caractérisé en ce que** l'élément de régulation de la pression (50) ne comprend qu'un seul second orifice de raccord (532), et que la section transversale du second orifice de raccord (532) est inférieure à la section transversale radiale du compartiment de liaison (531).

15. Cuiseur électrique selon la revendication 11, **caractérisé en ce que** l'élément de régulation de la pression (50) comprend plusieurs seconds orifices de raccord (532), et que la somme des sections transversales de ces seconds orifices de raccord (532) est inférieure à la section transversale radiale du compartiment de liaison (531).

16. Cuiseur électrique selon la revendication 11, **caractérisé en ce que** le cylindre d'installation (53) est installé sur le bord supérieur du panier à vapeur (3).

## Patentansprüche

1. Elektrischer Kocher, umfassend:
- einen Innenbehälter (2);
- im Inneren des Innenbehälters (2) ist ein Dampfgarkorb (3) eingebaut, und unter diesem Dampfgarkorb (3) befindet sich ein Öffnungsmechanismus (22), der der Wand des Bodens des Innenbehälters (2) zugewandt ist und/oder in der Verlängerung der Seitenwand des Innenbehälters (2) liegt; der Dampfgarkorb (3) ist mit einem durchlässigen Bereich versehen und schließt eine Füllkammer (11) ein, die auf diesem durchlässigen Bereich liegt; ein Öffnungsraum, der vom Öffnungsmechanismus (22) umgeben ist, ist mittels des durchlässigen Bereichs mit der Füllkammer (11) verbunden; der obere Teil des Dampfgarkorbs (3) und die obere Öffnung des Innenbehälters (2) sind hermetisch zusammengefügt; **dadurch gekennzeichnet, dass**:
- wobei ein Element zum Regeln des Drucks (50) mit mindestens einem Teil dieses Elements zum Regeln des Drucks (50) am Innenbehälter (2) oder dem Dampfgarkorb (3) eingebaut ist.

2. Elektrischer Kocher nach Anspruch 1, **dadurch gekennzeichnet, dass** der Abstand zwischen der Außenfläche des Dampfgarkorbs (3) und der seitlichen Innenfläche des Innenbehälters (2) ein Fach (31) bildet; und dadurch, dass der elektrische Kocher umfasst:
- ein Außengehäuse (1), wobei der Innenbehälter (2) im Inneren des Außengehäuses (1) angeordnet ist;
- einen oberen Deckel (5), der am Außengehäuse (1) angebracht ist, und der obere Deckel (5) ist mit einem Anschlusskanal (56) an den Raum außerhalb des elektrischen Kochers versehen, wobei das Element zum Regeln des Drucks (50) dazu bestimmt ist, den Verbindungszustand zwischen dem Anschlusskanal (56) und dem Fach (31) zu regeln.

3. Elektrischer Kocher nach Anspruch 2, **dadurch gekennzeichnet, dass** das Element zum Regeln des Drucks (50) umfasst:
- eine erste Anschlussöffnung (533), die auf dem Dampfgarkorb (3) liegt, wobei das Fach (31) mittels dieser ersten Anschlussöffnung (533) mit dem Anschlusskanal (56) verbunden ist, und das Fach (31), die erste Anschlussöffnung (533) und der Anschlusskanal (56) einen Luftkreislauf bilden;
- ein Schaltelement (55), welches Schaltelement (55) im Inneren des Luftkreislaufs eingebaut ist und den Öffnungs- und Schließzustand des Luftkreislaufs steuert.

4. Elektrischer Kocher nach Anspruch 3, **dadurch gekennzeichnet, dass** das Schaltelement (55) im Inneren des Anschlusskanals (56) eingebaut ist.

5. Elektrischer Kocher nach Anspruch 3, **dadurch gekennzeichnet, dass** es sich beim Schaltelement (55) um eine Rückschlagklappe oder ein Magnetventil handelt.

6. Elektrischer Kocher nach Anspruch 3, **dadurch gekennzeichnet, dass** es sich beim Schaltelement (55) um eine Kompressionspumpe handelt, welche Kompressionspumpe das Fach (31) mit Druck beaufschlägt.

7. Elektrischer Kocher nach einem der Ansprüche 3 bis 6, **dadurch gekennzeichnet, dass** das Element zum Regeln des Drucks (50) ein Anschlussrohr (544) umfasst, das der ersten Anschlussöffnung (533) entspricht, und das Schaltelement (55) mittels dieses Anschlussrohrs (544) mit dem Fach (31) verbunden ist.

8. Elektrischer Kocher nach Anspruch 7, **dadurch gekennzeichnet, dass** das Element zum Regeln des Drucks (50) einen Einbauzylinder (53) umfasst, der am Dampfgarkorb (3) liegt, sich an den zwei Enden dieses Einbauzylinders (53) jeweils die zweite Anschlussöffnung (532) und die erste Anschlussöffnung (533) befinden, der Einbauzylinder (53) ein Verbindungsfach (531) umfasst, das mit der zweiten Anschlussöffnung (532) und der ersten Anschlussöffnung (533) verbunden ist, das Fach (31) mittels der zweiten Anschlussöffnung (532), des Verbindungsfachs (531), der ersten Anschlussöffnung (533) und des Anschlussrohrs (544) mit dem Schaltelement (55) verbunden ist.

9. Elektrischer Kocher nach Anspruch 8, **dadurch gekennzeichnet, dass** das Element zum Regeln des Drucks (50) umfasst:
- ein elastisches Stück (542), das im Inneren des Verbindungsfachs (531) eingebaut ist;
- ein Dichtungsstück (543), das im Inneren des Verbindungsfachs (531) eingebaut ist, welches Dichtungsstück (543) mit einer Durchgangsöffnung (5431) versehen ist, die in der axialen Verlängerung des Einbauzylinders (53) liegt, und welches Dichtungsstück (543) im Bereich der ersten Anschlussöffnung (533) sich auf dem elastischen Stück (542) abstützend angeordnet ist; das ist Anschlussrohr (544) mit der Durchgangsöffnung (5431) verbunden.

10. Elektrischer Kocher nach Anspruch 9, **dadurch gekennzeichnet, dass** der Einbauzylinder (53) einen Arretiermechanismus umfasst, der im Inneren des Verbindungsfachs (531) vorspringt, welcher Arretiermechanismus im Bereich der ersten Anschlussöffnung (533) liegt, um das Dichtungsstück (543) zu arretieren.

11. Elektrischer Kocher nach einem der Ansprüche 1 bis 10, **dadurch gekennzeichnet, dass** der Abstand zwischen der Außenfläche des Dampfgarkorbs (3) und der seitlichen Innenfläche des Innenbehälters (2) das Fach (31) bildet; und dadurch, dass das Element zum Regeln des Drucks umfasst:
- einen Einbauzylinder (53), der am Dampfgarkorb (3) liegt; an den zwei Enden dieses Einbauzylinders (53) befinden sich jeweils die erste Anschlussöffnung (533) und die zweite Anschlussöffnung (532); der Einbauzylinder (53) umfasst ein Verbindungsfach (531), das mit der zweiten Anschlussöffnung (532) und mit der ersten Anschlussöffnung (533) verbunden ist; das Fach (31) ist mit der zweiten Anschlussöffnung (532) verbunden;
- ein Verschlussstück (541), das dazu bestimmt ist, die zweite Anschlussöffnung (532) oder die erste Anschlussöffnung (533) zu verschließen, welches Verschlussstück (541) beweglich im Inneren des Verbindungsfachs (531) eingebaut ist; wenn das Verschlussstück (541) die zweite Anschlussöffnung (532) oder die erste Anschlussöffnung (533) verlässt, sind die zweite Anschlussöffnung (532), das Verbindungsfach (531) und die erste Anschlussöffnung (533) miteinander verbunden.

12. Elektrischer Kocher nach Anspruch 11, **dadurch gekennzeichnet, dass** das Element zum Regeln des Drucks (50) das elastische Stück (542) umfasst, das im Inneren des Verbindungsfachs (531) eingebaut ist, das Verschlussstück (541) fest vom elastischen Stück (542) auf der zweiten Anschlussöffnung (532) komprimiert wird und dieselbe verschließt.

13. Elektrischer Kocher nach Anspruch 12, **dadurch gekennzeichnet, dass** es sich beim Verschlussstück (541) um eine Kugel handelt.

14. Elektrischer Kocher nach Anspruch 13, **dadurch gekennzeichnet, dass** das Element zum Regeln des Drucks (50) nur eine einzige zweite Anschlussöffnung (532) umfasst, und dass der Querschnitt der zweiten Anschlussöffnung (532) kleiner ist als der radiale Querschnitt des Verbindungsfachs (531).

15. Elektrischer Kocher nach Anspruch 11, **dadurch gekennzeichnet, dass** das Element zum Regeln des Drucks (50) mehrere zweite Anschlussöffnungen (532) umfasst, und dass die Summe der Querschnitte dieser zweiten Anschlussöffnungen (532) kleiner ist als der radiale Querschnitt des Verbindungsfachs (531).

16. Elektrischer Kocher nach Anspruch 11, **dadurch gekennzeichnet, dass** der Einbauzylinder (53) am oberen Rand des Dampfgarkorbs (3) eingebaut ist.

## Claims

1. Electric cooker comprising
an inner container (2);
inside the inner container (2) a steam basket (3) is installed, and beneath this steam basket (3) is an opening mechanism (22) facing the bottom wall of the inner container (2) and/or situated in the extension of the side wall of the inner container (2); the steam basket (3) is provided with a permeable area and includes a filling chamber (11) situated on this permeable area; an opening space surrounded by the opening mechanism (22) is linked to the filling chamber (11) via the permeable area; the top portion of the steam basket (3) and the top opening of the inner container (2) are hermetically joined;
**characterised in that**:
a pressure control element (50), with at least a portion of this pressure control element (50) being installed on the inner container (2) or the steam basket (3).

2. Electric cooker according to claim 1, **characterised in that** the interval between the outer surface of the steam basket (3) and the inner lateral surface of the inner container (2) forms a compartment (31); and **in that** the electric cooker comprises:
an outer housing (1), the inner container (2) being arranged inside the outer housing (1);
a top cover (5) mounted on the outer housing (1), and the top cover (5) is provided with a fitting channel (56) with the space outside the electric cooker, the pressure control element (50) intended to adjust the state of the connection between the fitting channel (56) and the compartment (31).

3. Electric cooker according to claim 2, **characterised in that** the pressure control element (50) comprises:
a first fitting orifice (533) situated on the steam basket (3), the compartment (31) being linked to said fitting channel (56) via this first fitting orifice (533), and the compartment (31), the first fitting orifice (533) and the fitting channel (56) forming an air circuit;
a switching element (55), said switching element (55) is installed inside the air circuit and controls the state of the opening and closing of the air circuit.

4. Electric cooker according to claim 3, **characterised in that** the switching element (55) is installed inside the fitting channel (56).

5. Electric cooker according to claim 3, **characterised in that** the switching element (55) is a non-return valve or a solenoid valve.

6. Electric cooker according to claim 3, **characterised in that** the switching element (55) is a compression pump, said compression pump pressurises the compartment (31).

7. Electric cooker according to one of claims 3 to 6, **characterised in that** the pressure control element (50) comprises a connection hose (544) that corresponds to the first fitting orifice (533), and the switching element (55) is linked to the compartment (31) via this connection hose (544).

8. Electric cooker according to claim 7, **characterised in that** the pressure control element (50) comprises an installation cylinder (53) situated on the steam basket (3), at the two ends of this installation cylinder (53) are respectively the second fitting orifice (532) and the first fitting orifice (533), the installation cylinder (53) comprises a connection compartment (531) which is linked to the second fitting orifice (532) and to the first fitting orifice (533), the compartment (31) is linked to the switching element (55) via the second fitting orifice (532), the connection compartment (531), the first fitting orifice (533) and the connection hose (544).

9. Electric cooker according to claim 8, **characterised in that** the pressure control element (50) comprises:
an elastic part (542) installed inside the connection compartment (531);
a sealing part (543) installed inside the connection compartment (531), said sealing part (543) is provided with a passage orifice (5431) situated in the axial extension of the installation cylinder (53), and said sealing part (543) is arranged at the first fitting orifice (533) bearing against the elastic part (542); the connection hose (544) is linked to the passage orifice (5431).

10. Electric cooker according to claim 9, **characterised in that** the installation cylinder (53) comprises a blocking mechanism protruding inside the connection compartment (531), said blocking mechanism is situated at the first fitting orifice (533) in such a way as to block the sealing part (543).

11. Electric cooker according to one of claims 1 to 10, **characterised in that** the interval between the outer surface of the steam basket (3) and the inner lateral surface of the inner container (2) forms the compartment (31); and **in that** the pressure control element comprises:
an installation cylinder (53) situated on the steam basket (3); at the two ends of this installation cylinder (53) are respectively the first fitting orifice (533) and the second fitting orifice (532); the installation cylinder (53) comprises a connection compartment (531) which is linked to the second fitting orifice (532) and to the first fitting orifice (533); the compartment (31) is linked to the second fitting orifice (532);
a closing part (541) intended to plug the second fitting orifice (532) or the first fitting orifice (533), said closing part (541) is movably installed inside the connection compartment (531); when the closing part (541) leaves the second fitting orifice (532) or the first fitting orifice (533), the second fitting orifice (532), the connection compartment (531) and the first fitting orifice (533) are linked together.

12. Electric cooker according to claim 11, **characterised in that** the pressure control element (50) comprises the elastic part (542) installed inside the connection compartment (531), the closing part (541) is firmly compressed by the elastic part (542) on the second fitting orifice (532) and plugs the latter.

13. Electric cooker according to claim 12, **characterised in that** the closing part (541) is a ball.

14. Electric cooker according to claim 13, **characterised in that** the pressure control element (50) comprises only one second fitting orifice (532), and the cross-section of the second fitting orifice (532) is less than the radial cross-section of the connection compartment (531).

15. Electric cooker according to claim 11, **characterised in that** the pressure control element (50) comprises several second connection orifices (532), and the sum of the cross-sections of these seconds connection orifices (532) is less than the radial cross-section of the connection compartment (531).

16. Electric cooker according to claim 11, **characterised in that** the installation cylinder (53) is installed on the top edge of the steam basket (3).
